# EUROPEAN PATENT APPLICATION

(11) **EP 2 172 437 A1**
(43) Date of publication of application: **07.04.2010**
(21) Application number: 09252282.0
(22) Date of filing: 26.09.2009
(51) Int. Cl.: C04B 40/00

(54) **Method and System for determining retarder concentration in cement systems**

(30) Priority: 02.10.2008 GB 0817997
(71) Applicant: Building Adhesives Ltd, Trentham Stoke-on-Trent Staffordshire ST4 2JB (GB)
(72) Inventor: Mochrie, Stuart Andrew, Stoke-on-Trent, Staffordshire, ST4 8JB (GB); Longwell, David James, Stoke-on-Trent, Staffordshire, ST4 8JB (GB)
(74) Representative: Sales, Robert Reginald

(57) **Abstract**

The system comprising a cement based compound such as a rapid setting tile adhesive which sets with water. A retarder additive is provided along with an indication means to indicate how much retarder additive should be added to the compound and water to provide a settable material with required workability time, dependent on the prevailing temperature.

## Description

This invention concerns settable material systems, and also a method of forming a settable cement based compound.

Currently, rapid setting cement based tile adhesives are sold with retarder already blended into the powder. The adhesives are typically sold with a defined workability time (typically 30-45 minutes at 20-23C) and set time (typically 2-3hr at 20-23C), once water has been added to the adhesive. As the workability time is extended, the set time will also be extended.

The retarder is added to ensure that the tile fixer achieves the required workability time on site. If the workability time is too short, the adhesive may set before all the mixed product is applied, leading to waste of time and materials. The workability time on site will vary dramatically however, depending on site temperature.

If the workability time is too long, the adhesive will not set in the defined time. As a consequence, the area tiled may not be grouted and returned to service on time. This can be particularly significant in situations such as transport systems. Where work must be carried out in a limited time span, for instance during a night time shutdown.

According to the present invention there is provided a settable material system, the system comprising a cement based compound which sets with water, a retarder additive, and indication means to indicate how much retarder additive should be added to the compound and water to provide a settable material with required workability time dependent on the temperature.

The cement based compound may be any of an adhesive, a tile adhesive, a grout, or a leveling compound.

The cement based compound may be rapid setting and may include any of calcium aluminate cement, calcium sulfoaluminate cement, or amorphous alumina.

The cement based compound may also include ordinary Portland cement.

The cement based compound may also include a source of sulphate which may be calcium sulphate dihydrate, calcium sulphate hemihydrate, or anhydrous calcium sulphate.

The cement based compound may also include a filler which may be sand.

The cement based compound may include re-dispersible powder polymer, or a liquid dispersion polymer.

The cement based compound may include cellulose ether.

The cement based compound may include clay or modified clay.

The cement based compound may include an accelerator, which may be lithium or sodium carbonate.

The cement based product may include a retarder, which may be citric acid or citric acid based salts, tartaric acid or tartaric acid based salts.

The retarder additive may be citric acid or citric acid based salts, tartaric acid or tartaric acid based salts.

The retarder additive may be a solution, and may have a retarder additive concentration of 1 to 75%, and more particularly 10 to 15%.

In an alternative embodiment the retarder additive may be a powder.

The retarder additive may include a dye so as to provide a visual indication when the retarder additive has been added to water.

The cement based compound may also include a flow aid and/or a defoamer.

When the cement based compound is an adhesive, the compound may include 20 - 85wt% of cement based compound. When the filler is sand, a between 20 and 60wt% cement based compound may be provided.

When the cement based compound is a leveling compound, the concentration of cement based compound may be between 10 and 25wt%, and more particularly 10 and 15wt%.

When the cement based compound is a grout, the concentration of cement based compound may be 10 to 50wt%, and more particularly 20 to 50wt%.

The indication means may also indicate an amount of polymer which should be added with the water to the compound.

The invention also provides a method of forming a settable cement based compound, the method including noting the temperature where the compound is to set, consulting a guide to indicate how much retarder additive is required to provide a required workability time at the noted temperature, mixing said amount of retarder additive with water, adding the cement based compound to the water and thoroughly mixing.

The cement based compound may be according to any of the preceding twenty one paragraphs.

Polymer may also be added to the cement based compound with the water. The polymer may be premixed with the water.

Embodiments of the present invention will now be described by way of example only and with reference to the accompanying drawings, in which:
Fig. 1 is a graph of the pot life of a tile adhesive according to the invention against the amount of retarder additive added; and
Fig. 2 is a similar graph to Fig. 1 but for a different adhesive.

The present invention is usable with a range of cement based compounds which may be adhesives, and particularly tile adhesives, leveling compounds or grouts.

Provided below are details of five possible rapid setting cement based tile adhesives usable with the invention, with component proportions indicated as parts by weight:
Cement type 1.
A blend of;
   Ordinary Portland Cement (OPC)
   Calcium sulfoaluminate cement (CSA)
   Calcium sulfate dihydrate, calcium sulfate hemihydrate or anhydrous calcium sulfate (CS)
   Lime
   with the preferred blend being, by weight
   - OPC: 6-12
   - CSA: 1-4
   - CS: 0-2
   - Lime: 0-5
Cement type 2.
A blend of
   Ordinary Portland Cement (OPC)
   Calcium aluminate cement (CAC)
   Calcium sulfate dihydrate, calcium sulfate hemihydrate or anhydrous calcium sulfate (CS)
   Lime
   with the preferred blend being, by weight
   - OPC: 15-40
   - CAC: 3-10
   - CS: 0.1-5
   - Lime: 0-5
Cement type 3.
A blend of,
   Calcium aluminate cement (CAC)
   Ordinary Portland Cement (OPC)
   Calcium sulfate dihydrate, calcium sulfate hemihydrate or anhydrous calcium sulfate (CS)
   Lime
   with the preferred blend being, by weight
   - CAC: 10-30
   - OPC: 10-30
   - CS: 0-5
   - Lime: 0-5
Cement type 4.
A blend of,
   Calcium aluminate cement (CAC)
   Ordinary Portland Cement (OPC)
   Calcium sulfate dihydrate, calcium sulfate hemihydrate or anhydrous calcium sulfate (CS)
   Lime
   with the preferred blend being,
   - CAC: 10-30
   - CS: 0.1-15
   - OPC: 0-10
   - Lime: 0-5
Cement type 5
A blend of,
   Ordinary Portland Cement (OPC)
   Amorphous alumina (AmA)
   Calcium aluminate cement (CAC)
   Calcium sulfoaluminate cement (CSA)
   Calcium sulfate dihydrate, calcium sulfate hemihydrate or anhydrous calcium sulfate (CS).
   With the preferred blend being
   - OPC: 10-40
   - AmA: 0.1-4.0
   - CAC: 0-10
   - CSA: 0-10
   - CS: 0-5

In addition to the cement blend, the following materials could also be included in the cement based compounds.

### Filler - sand is typically used to reduce cost.

Re-dispersible powder polymer - this improves adhesion to low porosity surfaces such as fully vitrified tiles. Alternatively, if a 2-part adhesive is required, a liquid dispersion polymer may also be used as an admixture.
Cellulose ether - used to retain water and provide structure to the adhesive. If this was not added, the adhesive could be not easily applied and would dry extremely quickly. As a consequence, tiles could not be adjusted after fixing and extremely poor adhesion would occur as a dry skin would form on the adhesive surface. As an alternative to the cellulose ether, guar gums may also be used but these are not prevalent in the UK.
Clay or modified clay to add structure and improve non-slip.
Accelerator- typically this will be lithium or sodium carbonate. Alumina based systems have also been claimed to accelerate cement based adhesives.
Retarder - typically this will be citric acid or a citric acid based salt or tartaric acid or tartaric acid based salt.

An indicator in the form of a sheet, graph or computer program is provided for each cement type to indicate the amount of retarder additive required to be added to the cement type when mixed with water to provide a required workability time period at particular temperatures. Once the working conditions temperature has been ascertained, then a required amount of retarder additive solution can be added to water for making up the adhesive. The retarder additive is a solution of citric acid, tartaric acid or their salts, with a preferred concentration of 10 to 50%.

The required amount of retarder additive solution, which includes a dye is mixed with water, with the dye providing a visual confirmation that retarder additive is present. The adhesive is then added to the water and thoroughly mixed to give a workable adhesive for the indicated length of time dependent on temperature. This can be applied to a depth of 1 to 25mm, and typically 3 to 7mm, to adhere for instance tiles to a wall or floor. Initially the adhesive will be such that the tiles can be moved around a required amount for positioning.

The invention is also applicable to a cement based levelling compound. Such a compound should include one or more cement products as outlined above and typically the following constituents:
Filler
Re-dispersible powder polymer (or liquid dispersion polymer)
Cellulose ether - to prevent separation and bleeding of components to the surface
Accelerator
Retarder
Flow aids
Defoamers

Polymer may also be mixed with the cement type to improve adhesion strength or deformability. The polymer may be liquid and/or may be premixed with the water. Some polymer may also be included in the cement type.

The invention is also usable with cement based grouts. Again in addition to one or more cement products as outlined above, such a grout would typically include the following products:
Filler
Re-dispersible powder polymer (or liquid dispersion polymer) - for a basic grout neither would be required.
Cellulose ether - to ensure ease of application and water retention
Accelerator
Retarder

In some instances flow aids and defoamers may also be required for cement based grouts.

The leveling compound or grout can be mixed with water and retarder additive solution in a similar manner as outlined above, having checked for the required amount of retarder additive solution as determined by a guide for the particular working temperature.

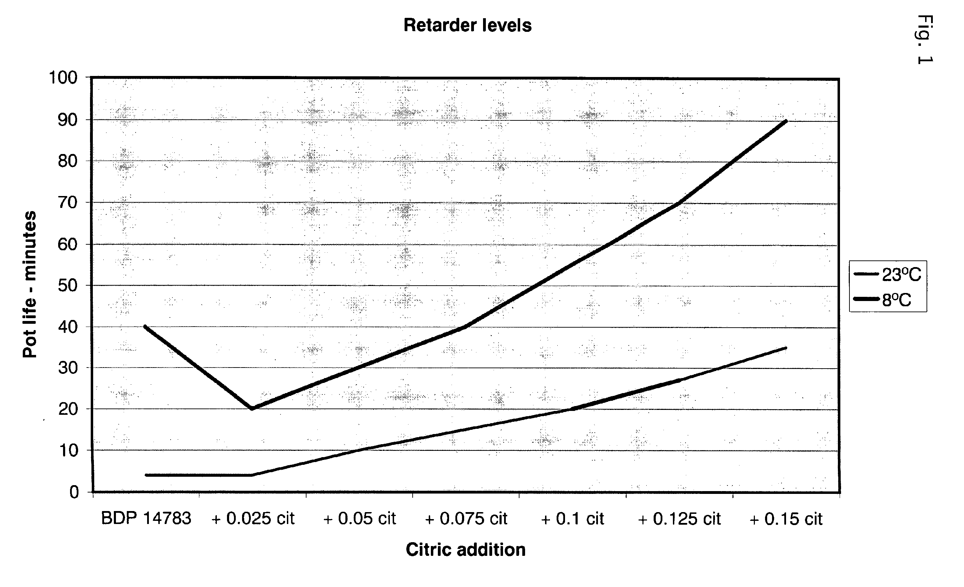

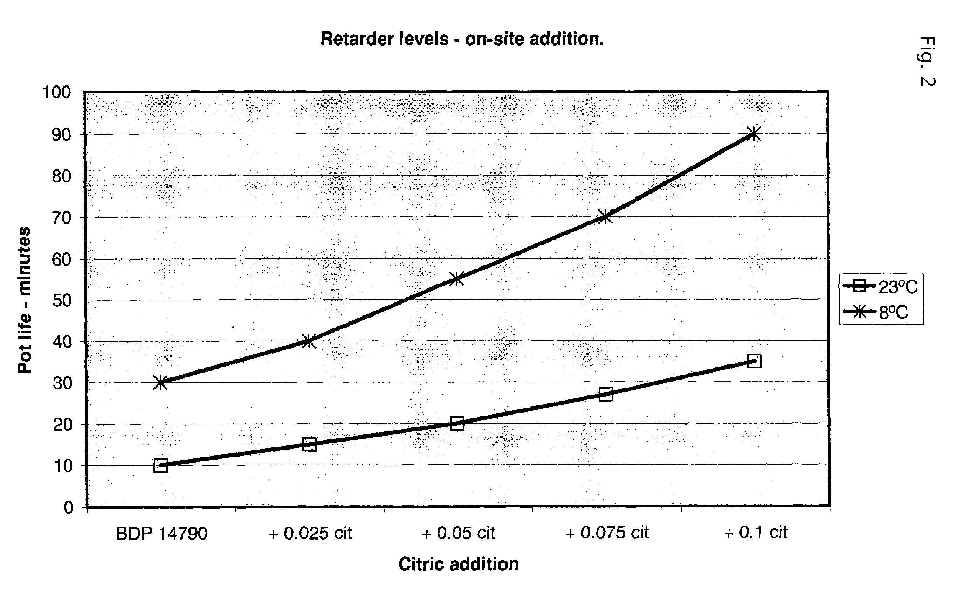

Figs. 1 and 2 show such guides in the form of charts for cements of the first type referred to above, with the top line being for a working temperature of 23°C, and the bottom line being for a temperature of 8°C. From the second graph it can be seen that for the second product to have a workability time of around 40mins at 8°C, an extra 0.025% of citric acid retarder would be added to the compound. For a workability time of 35 minutes at 23°C, an extra 0.1 % citric acid would be required.

Such charts would be supplied with the products, and perhaps also with a thermometer to measure the site temperature. Using the chart and a thermometer, and having decided the required workability time, the amount of retarder solution to be added to the product can be determined.

There is thus described a settable material system and a method of forming a settable cement based compound where the workability duration of the compound can be chosen, dependent on the working temperature, and a required amount of retarder additive can be added to be mixed with water and the compound.

Various modifications may be made without departing from the scope of the invention. For instance different compounds and other constituent components may be used. Retarder additives other than those based on citric or tartaric acid could be used. Rather than providing the additive in solution, it could be provided as a powder, and perhaps in pre-packed amounts, such that a required amount can be added to the compound and water.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A settable material system, the system comprising a cement based compound which sets with water, a retarder additive, and indication means to indicate how much retarder additive should be added to the compound and water to provide a settable material with required workability time dependent on the temperature.

2. A system according to claim 1, in which the cement based compound is any of an adhesive, a tile adhesive, a grout, or a leveling compound; and when the cement based compound is an adhesive, the compound includes 20-85wt% of cement based compound; when the cement based compound is a leveling compound, the concentration of cement based compound is between 10 and 25wt%, and more particularly between 10 and 15wt%; and when the cement based compound is a grout, the concentration of cement based compound is 10 to 50wt%, and more particularly 20 to 50wt%.

3. A system according to claims 1 or 2, in which the cement based compound is rapid setting, and the cement based compound may include any of calcium aluminate cement, calcium sulfoaluminate cement, or amorphous alumina.

4. A system according to any of the preceding claims, in which the cement based compound includes ordinary Portland cement, and may include a source of sulphate, and the source of sulphate maybe any of calcium sulphate dihydrate, calcium sulphate hemihydrate, or anhydrous calcium sulphate.

5. A system according to any of the preceding claims, in which the cement based compound includes a filler, which filler may be sand, and a between 20 and 60wt% cement based compound may be provided.

6. A system according to any of the preceding claims, in which the cement based compound includes any of a re-dispersible powder, a liquid dispersion polymer or a cellulose ether.

7. A system according to any of the preceding claims, in which the cement based compound includes clay, and may include modified clay.

8. A system according to any of the preceding claims, in which the cement based compound includes an accelerator, which may be lithium or sodium carbonate; and may include a retarder, which retarder may be any of citric acid or citric acid based salts, tartaric acid or tartaric acid based salts.

9. A system according to any of the preceding claims, in which the retarder additive is any of citric acid or citric acid based salts, tartaric acid or tartaric acid based salts.

10. A system according to any of the preceding claims, in which the retarder additive is a solution, and may have a retarder additive concentration of 1 to 75%, and more particularly 10 to 15%.

11. A system according to any of claims 1 to 9, in which the retarder additive is a powder, and the retarder additive may include a dye so as to provide a visual indication when the retarder additive has been added to water.

12. A system according to any of the preceding claims, in which the cement based compound may include a flow aid and/or a defoamer.

13. A system according to any of the preceding claims, in which the indication means also indicates an amount of polymer which should be added with the water to the compound.

14. A method of forming a settable cement based compound, the method including noting the temperature where the compound is to set, consulting a guide to indicate how much retarder additive is required to provide a required workability time at the noted temperature, mixing said amount of retarder additive with water, adding the cement based compound to the water and thoroughly mixing.

15. A method according to claim 14, in which the cement based compound is according to any of claims 1 to 13, in which polymer may be added to the cement based compound with the water, and the polymer may be premixed with the water.
